# EUROPÄISCHE PATENTANMELDUNG

(11) **EP 3 144 757 A1**
(43) Veröffentlichungstag der Anmeldung: **22.03.2017**
(21) Anmeldenummer: 15185931.1
(22) Anmeldetag: 18.09.2015
(51) Int. Cl.: G05B 19/4069

(54) **SIMULATIONSVERFAHREN ZUR SIMULATION EINER REALEN STEUERUNG FÜR EINEN INDUSTRIELLEN PROZESS, EINE ANLAGE ODER EINE MASCHINE SOWIE SIMULATIONSSYSTEM ZUR AUSFÜHRUNG EINES DERARTIGEN SIMULATIONSVERFAHRENS**

(71) Anmelder: Siemens Aktiengesellschaft, 80333 München (DE)
(72) Erfinder: Amthor, Karl-Josef, 82229 Seefeld (DE)

(57) **Zusammenfassung**

Simulationsverfahren zur Simulation einer realen Steuerung (2) für einen industriellen Prozess, eine Anlage oder eine Maschine sollen im Simulationsverlauf auftretende Fehler leichter ermittelt werden können. Hierzu schlägt die Erfindung vor, dass ein Simulationssystem (7) Zwischenzustände bei der Simulation speichert und mit einem Zeitstempel versieht, wobei ein gespeicherter Zwischenzustand zu einem späteren Zeitpunkt erneut in das Simulationssystem (7) geladen und darauf basierend eine Simulation ausgeführt werden kann. Dadurch müssen Simulationen nicht stets mit dem Beginn des zu simulierenden Steuerungsprogramms starten.

## Beschreibung

Die vorliegende Erfindung betrifft ein Simulationsverfahren zur Simulation einer realen Steuerung für einen industriellen Prozess, eine Anlage oder eine Maschine, wobei einem Simulationssystem ein Steuerprogramm zur Steuerung des industriellen Prozesses, der Anlage oder der Maschine vorgegeben wird, wobei das Simulationssystem unter Abarbeitung des Steuerprogramms mittels eines Simulationsprogramms Steuerbefehle für den Prozess, die Anlage oder Maschine ermittelt und wobei das Simulationssystem anhand eines Modells des Prozesses, der Anlage oder der Maschine erwartete Istwerte des Prozesses, der Anlage oder der Maschine ermittelt und bei der Simulation berücksichtigt. Sie betrifft ferner ein Simulationssystem zur Ausführung eines derartigen Simulationsverfahrens.

Werkzeugmaschinen sind allgemein bekannt. Sie werden von numerischen Steuerungen gesteuert. Die numerischen Steuerungen arbeiten Anwenderprogramme (Steuerprogramme) ab, die aus Anweisungsschritten bestehen, z.B. Teileprogramme gemäß DIN 66025 oder DIN 66025+. Ein Anwenderprogramm legt dabei z.B. fest, welche Maschinenabläufe, z.B. welche Verfahrbewegungen, von einer Werkzeugmaschine vorgenommen werden.

Neben numerischen Steuerungen für Werkzeugmaschinen gibt es eine Reihe weiterer industrieller Steuerungen allgemein zur Steuerung industrieller Prozesse, Anlagen oder Maschinen. Darunter fallen zum Beispiel speicherprogrammierbare Steuerungen (SPS bzw. PLC) oder Steuerungen für Produktionsmaschinen, Roboter etc.

Industrielle Steuerungen weisen häufig als Betriebssystem ein Echtzeitbetriebssystem auf. Sie weisen ferner eine Steuerungssoftware auf. Die Steuerungssoftware bewirkt die Umsetzung der Anweisungsschritte des Anwenderprogramms (Steuerprogramms bzw. Teileprogramms) in Steuerbefehle. Das Echtzeitbetriebssystem sorgt dafür, dass diese Umsetzung in Echtzeit erfolgt.

Um festzustellen, welche Bearbeitungen z. B. ein Teileprogramm für eine CNC-Steuerung bei einem bestimmten Werkstück tatsächlich bewirkt, ist es selbstverständlich möglich, versuchsweise ein Werkstück bearbeiten zu lassen, die Bearbeitung zu überprüfen und sodann gegebenenfalls das Anwenderprogramm zu korrigieren. Es ist aber sofort und ohne Weiteres ersichtlich, dass diese Vorgehensweise zum Ersten zeitaufwändig, zum Zweiten materialaufwändig und zum Dritten kostenintensiv ist.

Aus diesem Grund sind Simulationsverfahren für eine Bearbeitung eines Werkstücks durch eine Werkzeugmaschine bekannt, zum Beispiel aus der Druckschrift DE10352815A1. Mit derartigen Simulationsverfahren kann rechnergestützt die Bearbeitung eines Werkstücks durch eine Werkzeugmaschine simuliert werden.

Ferner ist das Aufzeichnen von Daten, denen ein Zeitstempel beigefügt wurde, aus der Druckschrift DE19843780A1 bekannt.

Bei der Simulation einer industriellen Steuerung wird das Steuerprogramm von Beginn an sequentiell abgearbeitet. Tritt im Simulationsverlauf ein Fehler auf, dessen Ursache bereits zeitversetzt in der Vergangenheit liegt, muss die Simulationssitzung zur Fehlersuche von Anfang an neu durchgeführt werden.

Die Aufgabe der vorliegenden Erfindung besteht darin, ein Simulationsverfahren sowie ein Simulationssystem zu schaffen, mittels derer die Ursachen im Simulationsverlauf auftretender Fehler leichter ermittelt werden können.

Die Aufgabe wird gelöst durch ein Simulationsverfahren zur Simulation einer realen Steuerung für einen industriellen Prozess, eine Anlage oder eine Maschine,
- wobei einem Simulationssystem ein Steuerprogramm zur Steuerung des industriellen Prozesses, der Anlage oder der Maschine vorgegeben wird,
- wobei das Simulationssystem unter Abarbeitung des Steuerprogramms mittels eines Simulationsprogramms Steuerbefehle für den Prozess, die Anlage oder Maschine ermittelt,
- wobei das Simulationssystem anhand eines Modells (M) des Prozesses, der Anlage oder der Maschine erwartete Istwerte des Prozesses, der Anlage oder der Maschine ermittelt und bei der Simulation berücksichtigt,
- wobei das Simulationssystem Zwischenzustände bei der Simulation speichert und mit einem Zeitstempel versieht und wobei ein gespeicherter Zwischenzustand zu einem späteren Zeitpunkt erneut in das Simulationssystem geladen und darauf basierend eine Simulation ausgeführt werden.

Ferner wird die Aufgabe gelöst durch ein Simulationssystem zur Simulation einer realen Steuerung für einen industriellen Prozess, eine Anlage oder eine Maschine,
- wobei dem Simulationssystem ein Steuerprogramm zur Steuerung des industriellen Prozesses, der Anlage oder der Maschine vorgebbar ist,
- wobei durch das Simulationssystem unter Abarbeitung des Steuerprogramms mittels eines Simulationsprogramms Steuerbefehle für den Prozess, die Anlage oder Maschine ermittelbar sind,
- wobei durch das Simulationssystem anhand eines Modells (M) des Prozesses, der Anlage oder der Maschine erwartete Istwerte des Prozesses, der Anlage oder der Maschine ermittelbar und bei der Simulation berücksichtigbar sind,
- wobei durch das Simulationssystem Zwischenzustände bei der Simulation speicherbar und mit einem Zeitstempel versehbar sind und wobei ein gespeicherter Zwischenzustand zu einem späteren Zeitpunkt erneut in das Simulationssystem ladbar und darauf basierend eine Simulation ausführbar sind.

Der Kern der vorliegenden Erfindung besteht also darin, dass das Simulationssystem Zwischenzustände bei der Simulation speichert und mit einem Zeitstempel versieht, wobei die gespeicherten Zwischenzustände zu einem späteren Zeitpunkt erneut in das Simulationssystem geladen und darauf basierend eine Simulation ausgeführt werden. Das System kann dadurch zu einem beliebigen Zeitpunkt in der simulierten Vergangenheit neu aufgesetzt werden. Die Simulation muss damit nicht stets von Anbeginn neu gestartet werden. Dies kann die zur Fehlersuche erforderliche Zeit erheblich reduzieren.

Ein erfindungsgemäßes Simulationssystem umfasst eine Simulationshardware, vorzugsweise einen Standard-PC, auf dem eine Simulationssoftware läuft. Die Simulationssoftware ist vorzugsweise speziell für die zu simulierende, reale industrielle Steuerung entwickelt oder zumindest daran angepasst. Zur Simulation des Verhaltens der realen industriellen Steuerung, die einen realen industriellen Prozess, eine reale Anlage oder eine reale Maschine steuert, wird in das Simulationssystem ein von der industriellen Steuerung auszuführendes Steuerprogramm geladen. Vorzugsweise ist das Steuerprogramm identisch mit dem auf der realen Steuerung laufenden Steuerprogramm und beschreibt die von der Steuerung auszuführenden Steuerfunktionen. Das Steuerprogramm wird mittels des Simulationsprogrammes abgearbeitet bzw. ausgeführt. Hierfür stellt das Simulationsprogramm die erforderlichen Eingangsdaten bzw. Eingangssignale ("Istwerte") zur Verfügung und erfasst die von der simulierten Steuerung erzeugten Ausgangssignale in Form von Steuerbefehlen für den betreffenden Prozess bzw. die Anlage oder Maschine. Dabei können die Istwerte auch Prozess- bzw. Maschinenzustände sowie zu erwartende Sensorsignale umfassen. Die Istwerte werden vorteilhaft anhand geeigneter Modelle für den jeweiligen Prozess, die Anlage oder Maschine ermittelt. Die Modelle sind in der Regel durch eine entsprechend parametrierte Software in das Simulationssystem eingebunden.

Gemäß der Erfindung werden bei der simulierten Steuerung Zwischenzustände ausgelesen und gespeichert. Darunter ist insbesondere zu verstehen, dass Speicherinhalte und/oder Systemzustände ausgelesen und zwischengespeichert werden. Vorteilhaft werden alle relevanten Speicherinhalte und/oder Systemzustände der simulierten Steuerung ausgelesen und zwischengespeichert. Damit werden auch die Eingangssignale (Istwerte) erfasst, da auch diese in Speichern hinterlegt sind. Vorteilhaft werden die zwischengespeicherten Daten mit Zeitstempeln versehen, so dass für die entsprechenden Speicher zu einem späteren Zeitpunkt abgefragt werden kann, unter welcher Speicheradresse zu welchem Zeitpunkt welcher Inhalt gespeichert war. Wird diese Aufzeichnung für die gesamte Dauer der Simulation durchgeführt, so lässt sich jeder Zustand während der gesamten Simulation rekonstruieren und analysieren. Besonders vorteilhaft kann jedoch bei Bedarf ein bestimmter Zwischenzustand einer durchgeführten Simulation neu geladen und ausgehend von diesem Zustand die Simulation erneut durchgeführt werden. Durch die Zeitstempel werden die Daten mit einem zeitlichen Bezug aufgezeichnet, anhand dessen erkennbar ist, zu welchem Zeitpunkt bzw. in welchem Zeitraum die Daten gültig waren bzw. vorgelegen haben.

Zum Auslesen der Speicherinhalte bzw. Systemzustände sowie zum Speichern der Zwischenzustände in Verbindung mit einem Zeitstempel ist vorteilhaft eine entsprechend programmiete Simulationssteuerung vorhanden. Diese sorgt bei Bedarf auch dafür, dass ein gespeicherter Zwischenzustand wieder in die simulierte Steuerung zurückgespielt wird.

Das Auslesen und Aufzeichnen der Zwischenzustände kann zu bestimmten Zeitpunkten erfolgen, beispielsweise in periodischen Abständen während der gesamten Simulation, oder für einen bestimmten Simulationsabschnitt. Das Auslesen und die Aufzeichnung können aber auch Ereignis-getriggert sein. Das heißt, dass die Aufzeichnung immer dann erfolgt, wenn das betreffende Ereignis eintritt. Die Aufzeichnung kann jedoch auch manuell getriggert sein, das heißt vor allem als Reaktion auf eine entsprechende Anweisung durch einen Benutzer. Insbesondere bei der Aufzeichnung von Speicherinhalten bzw. Systemzuständen über einen längeren Zeitraum ist es von Vorteil, wenn die betreffenden Daten nicht zu periodischen Zeitpunkten ausgelesen und gespeichert werden, sondern nur dann, wenn sich an einem bestimmten Datum etwas ändert. In Verbindung mit den o.g. Zeitstempeln, die den Zeitpunkt der letzten Änderung des betreffenden Datums festhalten, lässt sich auch so für einen bestimmten Zeitpunkt ein komplettes Abbild der Speicherinhalte bzw Systemzustände gewinnen und das erzeugte Datenvolumen deutlich reduzieren.

Bei einer bevorzugten Ausführungsform der Erfindung umfasst die simulierte (virtuelle) Steuerung mehrere virtuelle Komponenten, die zu realen Komponenten der realen Steuerung korrespondieren, wobei Zwischenzustände für die einzelnen virtuellen Komponenten gespeichert werden. Beispielsweise umfasst eine numerische Steuerung (CNC - Computerized Numerical Control) für eine Werkzeugmaschine in der Regel einen NCK (Numerical Control Kernel) wohinter sich das Echtzeitsystem verbirgt, welches für die Relativbewegung zwischen Werkzeug und Werkstück bei der Bearbeitung des Werkstückes sorgt. Daneben umfasst eine CNC-Steuerung immer auch eine PLC (Programmable Logic Control) für eine Vielzahl nebengeordneter Steuerfunktionen bei einer Werkzeugmaschine. Diese überwacht beispielsweise Sicherheitseinrichtungen oder sorgt bei Bedarf für einen Werkzeugwechsel. Als weitere wesentliche Komponente einer CNC-Steuerung ist in der Regel auch ein HMI (Human-Machine-Interface) vorhanden, das einem Bediener Zugriff auf die Steuerung ermöglicht. Das erfindungsgemäße Verfahren kann nur bei einer der Komponenten angewendet werden. Vorzugsweise wird es jedoch bei mehreren, insbesondere allen Komponenten der betreffenden Steuerung angewendet. Damit sind eine umfassende Simulation der korrespondierenden realen Steuerung und eine entsprechend der Erfindung auf die gesamte Steuerung bezogene, vereinfachte Fehlerfindung möglich.

Vorteilhaft können die virtuellen Komponenten die Zwischenzustände jeweils komponenten-intern speichern und erneut laden. Das heißt, jede Komponente speichert ihre Zwischenzustände selbst und lädt sie entsprechend bei Bedarf wieder. Dies vereinfacht das Handling und gewährt einen besseren Überblick über die aufgezeichneten Daten.

Bei einer weiteren vorteilhaften Ausführungsform werden dem Simulationssystem Prozess- bzw. Anlagen- bzw. Maschinenparameter vorgegeben und das Simulationssystem passt damit das Modell des Prozesses, der Anlage oder der Maschine an den realen Prozess, die reale Anlage oder die reale Maschine an. Dadurch kann die Simulationssoftware flexibel gestaltet werden und dennoch lassen sich hinreichend genaue Modelle erzeugen.

Weitere Vorteile und Einzelheiten ergeben sich aus der nachfolgenden Beschreibung eines Ausführungsbeispiels in Verbindung mit den Zeichnungen. Dabei zeigen in Prinzipdarstellung:
- FIG 1: schematisch eine Werkzeugmaschine und ein Simulationssystem,
- FIG 2: das Speichern von Zwischenzuständen zu unterschiedlichen Zeitpunkten und
- FIG 3: das Laden eines bestimmten gespeicherten Zwischenzustands.

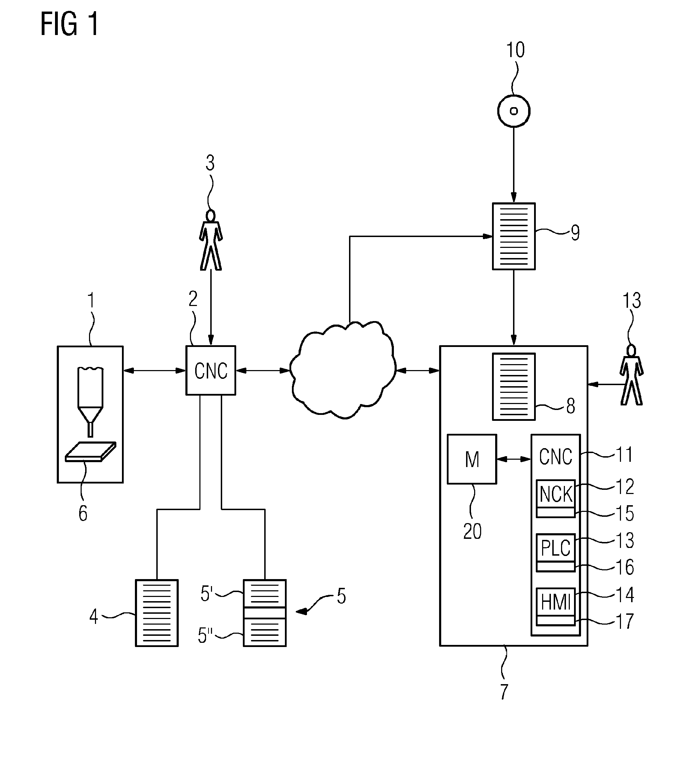

Gemäß FIG 1 wird eine schematisch dargestellte Werkzeugmaschine 1 von einer realen numerischen Steuerung 2 (CNC 2) gesteuert. Der numerischen Steuerung 2 wird hierzu z. B. von einem Anwender 3 oder von einem nicht dargestellten Leitrechner ein Anwenderprogramm (Steuerprogramm) 4, im Zusammenhang mit einer CNC-Steuerung auch Teileprogramm genannt, zugeführt. Das Anwenderprogramm 4 besteht dabei aus Anweisungsschritten, die die von der Werkzeugmaschine 1 zu realisierende Bearbeitung beschreiben. Die Anweisungsschritte können alternativ maschinenabhängig oder maschinenunabhängig sein.

Die numerische Steuerung 2 arbeitet das Anwenderprogramm 4 ab. Im Rahmen der Abarbeitung des Anwenderprogramms 4 ermittelt die numerische Steuerung 2 schrittweise maschinenabhängige Steuerbefehle für die Werkzeugmaschine 1 und steuert die Werkzeugmaschine 1 entsprechend. Dies geschieht im Rahmen eines Echtzeitkerns (NCK) 5. Der Echtzeitkern 5 umfasst ein Echtzeitbetriebssystem 5' und einer Steuerungssoftware 5". Diese sind von einem Hersteller der numerischen Steuerung 2 in der numerischen Steuerung 2 hinterlegt worden. Im Rahmen der Abarbeitung des Anwenderprogramms 4 durch die numerische Steuerung 2 wird von der Werkzeugmaschine 1 mittels eines Werkzeugs z. B. ein Werkstück 6 bearbeitet.

Um die Bearbeitung des Werkstücks 6 durch die Werkzeugmaschine 1 zu simulieren, ist ein Simulationssystem 7 vorgesehen, auf dem zur Simulation der Steuerung 2 ein dafür eingerichtetes Simulationsprogramm 8 ausgeführt wird. Das Simulationssystem 7 ist gemäß FIG 1 eine von der numerischen Steuerung 2 verschiedene Einrichtung. Es dient also nicht der Steuerung der Werkzeugmaschine 1.

Gemäß FIG 1 weist das Simulationssystem 7 unter anderem einen Massenspeicher (nicht dargestellt) auf, z. B. eine Festplatte. Ein zu simulierendes Steuerprogramm 9 wird in den Massenspeicher geladen. Das Steuerprogramm 9 kann dabei, wie in FIG 1 angedeutet, dem Simulationssystem 7 zuvor z.B. über einen Datenträger 10 zugeführt worden sein, auf dem das Steuerprogramm 9 in (ausschließlich) maschinenlesbarer Form gespeichert ist. Ein Beispiel für einen derartigen Datenträger 10 ist eine CD-ROM. Das Steuerprogramm 9 kann dem Simulationssystem 7 aber auch auf andere Art zugeführt worden sein, z. B. über ein LAN (LAN = local area network) oder das Internet.

Das Steuerprogramm 9 ist dafür vorgesehen, später einmal auf die CNC 2 übertragen zu werden und mittels der Werkzeugmaschine 1 ein Werkstück zu fertigen. Zuvor soll es jedoch auf dem Simulationssystem 7 getestet werden. Hierzu simuliert das Simulationssystem 7 die Funktion der realen CNC-Steuerung 2 mittels einer virtuellen CNC-Steuerung 11. Auch die Funktion der Werkzeugmaschine 1 ist von dem Simulationssystem 7 in Form der virtuellen Werkzeugmaschine 20 mit umfasst. Das Simulationssystem 7 kann so das Steuerprogramm 9 so ausführen, wie es auch auf der realen CNC-Steuerung 2 ablaufen würde. Das Modell 20 der realen Werkzeugmaschine 1 sorgt dabei dafür, dass der virtuellen CNC-Steuerung 7 die erwarteten Istwerte (Maschinenzustände, Sensorsignale etc) der realen Werkzeugmaschine 1 für den jeweiligen Bearbeitungsschritt bereitgestellt werden.

Mittels eines Aufrufbefehls, der dem Simulationssystem 7 vorgegeben wird, ist das Steuerprogramm 9 aufrufbar. Der Aufrufbefehl kann dem Simulationssystem 7 z.B. von einem Benutzer 13 direkt vorgegeben werden. Es ist aber auch eine Vorgabe über eine Rechner-Rechner-Verbindung (nicht dargestellt) möglich, z.B. von der numerischen Steuerung 2 aus oder von einem nicht dargestellten anderen Rechner aus. Die Rechner-Rechner-Verbindung kann dabei prinzipiell beliebig ausgebildet sein. Beispielsweise kann sie als Ethernet- oder Internetverbindung ausgebildet sein. Auch andere Ausgestaltungen sind möglich. Bei Aufruf des Steuerprogramms 9 führt das Simulationssystem 7 ein Simulationsverfahren zur Simulation der CNC-Steuerung 2 und damit zur Simulation der Bearbeitung eines Werkstücks 6 durch die Werkzeugmaschine 1 aus.

Vorteilhaft ist die virtuelle CNC-Steuerung 11 in ihre wesentlichen Komponenten unterteilt, die da wären NCK 12, PLC 13 und HMI 14. Diese Unterteilung kann beispielsweise durch entsprechende Unterprogramme innerhalb des Simulationsprogrammes 8 implementiert sein. Weiterhin vorteilhaft sind diesen Komponenten eigene logische und/oder physikalische Speicherbereiche 15 bis 17 zugewiesen.

Erfindungsgemäß werden durch das Simulationssystem 7 Zwischenzustände bei der Simulation gespeichert und mit einem Zeitstempel versehen, derart dass ein gespeicherter Zwischenzustand zu einem späteren Zeitpunkt erneut in das Simulationssystem 7 geladen und darauf basierend eine erneute Simulation ausgeführt werden kann. Vorteilhaft werden die Zwischenzustände betreffende Daten in den Speicherbereichen 15 bis 17 abgelegt.

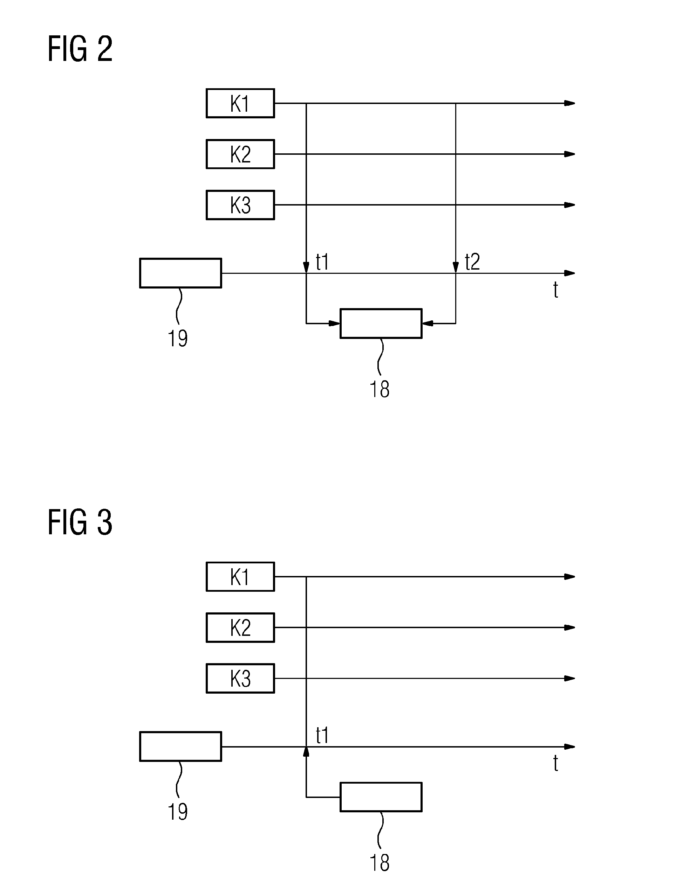

Die Figuren 2 und 3 veranschaulichen allgemein und unabhängig von dem speziellen Ausführungsbeispiel gemäß Figur 1 das Zwischenspeichern und erneute Laden bestimmter Zwischenzustände. Eine Übertragung der Ausführungen auf das spezielle Ausführungsbeispiel gemäß Figur 1 ist dem Fachmann jedoch ohne Weiteres möglich.

Gemäß FIG 2 werden zu bestimmten Zeitpunkten t1 und t2 die jeweiligen Zwischenzustände der Komponenten K1, K2 und K3 in einem Speicher 18 zwischengespeichert. Figur 2 veranschaulicht dabei vor allem den zeitlichen Ablauf. Insbesondere kann der Speicher 18 auch mehrere logische und/oder physikalische Speicher umfassen, die den jeweiligen Komponenten K1 bis K3 fest zugeordnet sind. Das Auslesen und Speichern der Zwischenzustände wird insbesondere durch eine Simulationssteuerung 19 gesteuert. Diese sorgt auch dafür, dass den zwischengespeicherten Werten jeweils der betreffende Zeitstempel zugeordnet wird, so dass einem betreffenden Systemzustand (Zwischenzustand) eine eindeutige Zeitangabe zu diesem Zustand zugeordnet ist.

Figur 3 veranschaulicht nun das Zurücksetzen des Simulationssystems auf einen zwischengespeicherten Systemzustand. Hierfür wird von dem Benutzer der Zeitpunkt vorgegeben, für den das System neu aufgesetzt, soll heißen der betreffende Zwischenzustand wieder hergestellt werden soll. Im Ausführungsbeispiel ist dies der Zeitpunkt t1. Somit werden die mit dem Zeitstempel t1 versehenen Speicherinhalte aus dem Speicher 18 ausgelesen und wieder in die ursprünglichen Speicherzellen rückübertragen. Die Simulation kann so ab dem Zeitpunkt t1 erneut durchgeführt werden.

Selbstverständlich kann das Steuerprogramm geändert werden, bevor die Simulation ab dem Zeitpunkt t1 beginnend neu gestartet wird. Dadurch können unterschiedliche Programmvarianten, beginnend ab dem Zeitpunkt t1, neu durchgespielt werden. Ebenso ist es möglich, dass Speicherinhalte und/oder Systemzustände manuell verändert werden, bevor die Simulation gestartet wird. Auch dadurch lassen sich unterschiedliche Ausgangssituationen testen, ohne dafür das Steuerprogramm stets von Anbeginn an neu ausführen zu müssen. Dies erhöht die Flexibilität und spart Zeit.

## Patentansprüche

1. Simulationsverfahren zur Simulation einer realen Steuerung (2) für einen industriellen Prozess, eine Anlage oder eine Maschine,
- wobei einem Simulationssystem (7) ein Steuerprogramm (9) zur Steuerung des industriellen Prozesses, der Anlage oder der Maschine vorgegeben wird,
- wobei das Simulationssystem (7) unter Abarbeitung des Steuerprogramms (9) mittels eines Simulationsprogramms (8) Steuerbefehle für den Prozess, die Anlage oder Maschine ermittelt,
- wobei das Simulationssystem (7) anhand eines Modells (20) des Prozesses, der Anlage oder der Maschine erwartete Istwerte des Prozesses, der Anlage oder der Maschine ermittelt und bei der Simulation berücksichtigt,
**dadurch gekennzeichnet,**
**dass** das Simulationssystem (7) Zwischenzustände bei der Simulation speichert und mit einem Zeitstempel versieht, wobei ein gespeicherter Zwischenzustand zu einem späteren Zeitpunkt erneut in das Simulationssystem (7) geladen und darauf basierend eine Simulation ausgeführt werden.

2. Simulationsverfahren nach Anspruch 1, wobei die simulierte Steuerung (11) mehrere virtuelle Komponenten (12, 13, 14; K1, K2, K3) umfasst, die zu realen Komponenten der realen Steuerung (2) korrespondieren, und wobei Zwischenzustände für die einzelnen virtuellen Komponenten (12, 13, 14; K1, K2, K3) gespeichert werden.

3. Simulationsverfahren nach Anspruch 2, wobei die virtuellen Komponenten (12, 13, 14; K1, K2, K3) die Zwischenzustände jeweils komponenten-intern speichern.

4. Simulationsverfahren nach einem der vorherigen Ansprüche, wobei dem Simulationssystem (7) Prozess- bzw. Anlagen- bzw. Maschinenparameter vorgegeben werden zur Anpassung des Modells (20) des Prozesses, der Anlage oder der Maschine an den realen Prozess, die reale Anlage oder die reale Maschine.

5. Simulationsverfahren nach einem der vorherigen Ansprüche zur Simulation einer numerischen Steuerung (2) für die Bearbeitung eines Werkstücks (6) durch eine Werkzeugmaschine (1).

6. Simulationssystem (7) zur Simulation einer realen Steuerung (2) für einen industriellen Prozess, eine Anlage oder eine Maschine,
- wobei dem Simulationssystem (7) ein Steuerprogramm (9) zur Steuerung des industriellen Prozesses, der Anlage oder der Maschine vorgebbar ist,
- wobei durch das Simulationssystem (7) unter Abarbeitung des Steuerprogramms (9) mittels eines Simulationsprogramms (8) Steuerbefehle für den Prozess, die Anlage oder Maschine ermittelbar sind,
- wobei durch das Simulationssystem (7) anhand eines Modells (20) des Prozesses, der Anlage oder der Maschine erwartete Istwerte des Prozesses, der Anlage oder der Maschine ermittelbar und bei der Simulation berücksichtigbar sind,
**dadurch gekennzeichnet,**
**dass** durch das Simulationssystem (7) Zwischenzustände bei der Simulation speicherbar und mit einem Zeitstempel versehbar sind, wobei ein gespeicherter Zwischenzustand zu einem späteren Zeitpunkt erneut in das Simulationssystem (7) ladbar und darauf basierend eine Simulation ausführbar sind.

7. Simulationssystem nach Anspruch 6, wobei die simulierte Steuerung (11) mehrere virtuelle Komponenten (12, 13, 14; K1, K2, K3) umfasst, die zu realen Komponenten der realen Steuerung (2) korrespondieren, und wobei Zwischenzustände für die einzelnen virtuellen Komponenten (12, 13, 14; K1, K2, K3) speicherbar sind.

8. Simulationssystem nach Anspruch 7, wobei durch die virtuellen Komponenten (12, 13, 14; K1, K2, K3) die Zwischenzustände jeweils komponenten-intern speicherbar sind.

9. Simulationssystem (7) nach einem der Ansprüche 6 bis 8, wobei dem Simulationssystem (7) Prozess- bzw. Anlagen- bzw. Maschinenparameter vorgebbar sind zur Anpassung des Modells (20) des Prozesses, der Anlage oder der Maschine an den realen Prozess, die reale Anlage oder die reale Maschine.

10. Simulationssystem (7) nach einem der Ansprüche 6 bis 9 zur Simulation einer numerischen Steuerung (2) für die Bearbeitung eines Werkstücks (6) durch eine Werkzeugmaschine (1).

11. Datenträger mit einem auf dem Datenträger gespeicherten Steuerprogramm (9) zur Durchführung eines Simulationsverfahrens nach einem der Ansprüche 1 bis 5.
